# FASCICULE DE BREVET EUROPEEN

(11) **EP 2 440 153 B1**
(45) Date de publication et mention de la délivrance du brevet: **03.04.2013**
(21) Numéro de dépôt: 10743194.2
(22) Date de dépôt: 10.06.2010
(51) Int. Cl.: A61C 8/00, A61C 13/265

(54) **DISPOSITIF ET PROCEDE DESTINES A MAINTENIR UNE PROTHESE EN IMPLANTOLOGIE DENTAIRE**
VORRICHTUNG UND VERFAHREN ZUM HALTEN EINER PROTHESE IN DER ZAHNIMPLANTOLOGIE
DEVICE AND METHOD INTENDED FOR HOLDING A PROSTHESIS IN DENTAL IMPLANTOLOGY

(30) Priorité: 10.06.2009 FR 0902814; 25.11.2009 FR 0905663
(43) Date de publication de la demande: 18.04.2012
(73) Titulaire: Segura, Claude, 66000 Perpignan (FR); Bes, Claude, 34000 Montpellier (FR)
(72) Inventeur: Segura, Claude, 66000 Perpignan (FR); Bes, Claude, 34000 Montpellier (FR)
(74) Mandataire: Gosse, Michel
(86) Numéro de dépôt international: PCT/FR2010/000424
(87) Numéro de publication internationale: WO 2010/142873

(56) Documents cités:
- EP-A1- 0 216 031
- EP-A1- 0 843 989
- EP-A1- 1 627 612
- WO-A1-2004/060197
- WO-A1-2004/080328
- WO-A2-2006/005284
- US-A- 4 681 542
- US-A1- 2002 177 103

## Description

### DOMAINE DE L'INVENTION

La présente invention se rapporte à un dispositif utilisé en implantologie dentaire, destiné à relier, une prothèse, du type bridge ou appareil, à un implant ou directement à l'os de la mâchoire d'un patient.

Elle se rapporte également au procédé pour la mise en oeuvre de la prothèse utilisant ledit dispositif.

### ARRIERE PLAN TECHNOLOGIQUE

Les implants dentaires les plus répandus sont généralement associés à des moignons métalliques transvissés dans leur partie supérieure. Le praticien dispose, par type d'implant, d'une gamme de moignons de différentes dimensions diamétrales et angulations qu'il choisit au cas par cas et qu'il positionne en fonction de l'inclinaison de chacun d'eux par rapport à l'axe d'insertion de la prothèse de manière à rattraper le disparallélisme qui existe toujours entre les divers implants associés à une même prothèse. Celle-ci, une fois réalisée, est scellée ou transvissée en bouche, de manière permanente, directement sur les moignons.

De tels implants et procédés présentent plusieurs types d'inconvénients.

Les premiers sont liés à la conception même des implants :
- nécessité, par type d'implant, de posséder un jeu de moignons spécifiques ;
- dans le cas de la dépose de la prothèse pour une éventuelle intervention sur la celle-ci, sur l'implant ou sur la mâchoire, du fait que la liaison entre la prothèse et le moignon n'est pas démontable, il existe le risque de l'endommager, donc de la refaire ;
- les moignons étant scellés de manière rigide dans la prothèse il en résulte que, sous l'effet des pressions masticatoires, les sollicitations sont directement transmises à l'implant qui, dans le temps, peut nécessiter une intervention avec dépose de la prothèse.

Les seconds sont liés à leur technique de mise en oeuvre qui consiste, chronologiquement :
a) pour le praticien, une fois le moignon choisi dimensionnellement et positionné angulairement sur l'implant, à réaliser l'empreinte, à retirer les moignons, à les visser sur des implants analogues et à les repositionner dans l'empreinte en respectant leur ordre (numérotation) et leur position angulaire initiale (repérage) ;
b) pour le prothésiste, à réaliser le maître-modèle puis la prothèse en respectant encore leurs positions numériques et leurs différentes angulations ;
c) enfin, pour le praticien, à replacer lesdits moignons transvissés sur les implants en respectant encore leur ordre et leur position angulaire initiale et à sceller ou visser la prothèse sur lesdits moignons ;
autrement dit du repérage numérique et angulaire à chaque étape de réalisation de la prothèse.

Parmi les documents de l'état de la technique la plus proche, on peut citer le document WO20041080328 qui concerne le domaine des prothèses transvissées sur des implants qui décrit un ensemble qui met en oeuvre les éléments suivants :
- deux implants, non parallèles, pourvus de gorges constituées d'une portion tronconique et d'une portion hexagonale anti-rotation ;
- deux piliers, ou moignons, destinés à être vissés sur lesdits implants, dont la portion inférieure est configurée pour venir s'emboîter exactement dans les portions correspondantes desdits implants ;
- un appareil prothétique, ou prothèse, pourvu de trous pour le passage des vis destinées à fixer les piliers sur les implants correspondants et également de cavités destinées à loger les portions supérieures des piliers qui sont maintenues dans lesdits logements par un ciment permanent.

Les particularités propres à la mise en oeuvre desdits éléments résident dans le fait que, lorsque la prothèse a été soumise à un essai d'adaptation, les piliers sont repositionnés dans les implants, un par un, sans la prothèse, en utilisant les portions anti-rotation, de manière à les placer dans la position et selon un angle corrects.

Si lesdites portions n'existaient pas, les piliers seraient placés selon des angles incorrects à cause de la rotation et la prothèse deviendrait inutilisable.

Une fois la prothèse terminée, les piliers étant solidaires de celle-ci, c'est ledit ensemble qui est solidarisé aux implants au moyen de vis, les trous étant ensuite bouchés au moyen de matière plastique ou de céramique.

La liaison amovible entre la prothèse et l'implant est faite par la base du pilier et non par la tête qui est collée de manière permanente à la prothèse.

D'autres particularités, constituant une variante de réalisation, concernent la prothèse qui est réalisée en deux structures superposées de métal et de porcelaine.

Parmi les documents de l'état de la technique la plus proche, on peut également citer le document EP1627612 qui décrit une structure destinée à fixer, de manière amovible, une prothèse sur un implant constituée d'un pilier vissé dans un implant, d'une couronne réalisée en deux parties, d'un élément annulaire élastique et fendu destiné à être en prise avec deux rainures circulaires aménagées respectivement sur la partie supérieure conique du pilier et sur la partie conique de la couronne interne.

En outre, il est précisé que le demi angle au sommet du cône du pilier est compris entre 8° et 15° pour permettre un meilleur démontage et remontage de la prothèse.

### RESUME DE L'INVENTION

L'invention vise à réaliser un dispositif, utilisé en implantologie dentaire, destiné à relier une prothèse à un implant ou directement à l'os de la mâchoire d'un patient, qui a pour but de supprimer les inconvénients susmentionnés.

Le dispositif selon l'invention, comprend :
- un pilier, monolithique, constitué d'une tige filetée apte à être vissée dans un implant ou directement dans l'os de la mâchoire maxillaire ou mandibulaire d'un patient, d'une embase médiane transgingivale et d'une tête tronconique dont les génératrices forment, par rapport à l'axe dudit pilier, dont de l'implant, un angle A, égal à l'angle (B) que forme l'axe (X) du pilier (1), ou de l'implant, avec l'axe (Z) d'insertion de la prothèse, dont la valeur, qui est choisie dans la plage 15-35 degrés, correspond à l'inclinaison maximale tolérée en bouche pour les implants appartenant à une même mâchoire ;
- une capsule, apte à assurer la liaison, permanente ou démontable, de la tête du pilier et de la prothèse, pourvue d'une cavité tronconique, apte à recevoir ladite tête, dont les génératrices forment, par rapport à l'axe de ladite capsule, un angle A dont la valeur est égale à celle de l'angle (A) de la tête tronconique (13) ;
de telle manière que les génératrices des parties coniques d'une quelconque paire de têtes (13) et de capsules (3) appartenant à une même prothèse (4), ne soient jamais en contre dépouille par rapport à l'axe d'insertion (Z) de ladite prothèse et ce sans avoir à respecter, pour chaque pilier ou chaque capsule, lors de la mise en oeuvre de la prothèse, un quelconque emplacement et une quelconque angulation.

Une telle conception permet de s'affranchir :
a) de tout positionnement angulaire de la tête et de tout emplacement bien spécifique du pilier, tout au long du processus de réalisation de la prothèse ;
b) des problèmes de défaut de parallélisme existant entre les implants associés à une prothèse donnée.
c) de tout choix dimensionnel de moignons : un seul type de pilier et un seul type de capsule suffisent pour réaliser une prothèse.

Dans la pratique, l'angle A peut être choisi dans la plage de valeurs, non limitatives, comprises entre 15 et 35 degrés.

Selon une autre caractéristique avantageuse de l'invention, liée à l'aspect démontable de la liaison entre la prothèse et les implants :
- la tête du pilier-implant est pourvue d'une rainure annulaire apte à recevoir la partie interne d'un segment annulaire élastique, notamment métallique ;
- la cavité tronconique de la capsule est pourvue d'une rainure annulaire apte à recevoir la partie externe dudit segment annulaire de manière à réaliser une liaison démontable « clipée » entre la tête du pilier-implant et la capsule qui est destinée à être intégrée à la prothèse lors de sa coulée ou à être collée après celle-ci.

Une telle conception permet :
- de retirer aisément la prothèse, sans avoir à la desceller, ni à la dévisser, soit pour une vérification clinique, soit pour des besoins d'hygiène dentaire quotidienne ;
- d'intervenir, soit sur un implant, soit sur un élément de la prothèse sans avoir à intervenir sur l'ensemble desdits éléments, avec le risque d'avoir à refaire la prothèse dans son intégralité.

Tout ceci est rendu possible par le fait que le parallélisme est automatiquement réalisé par les têtes coniques telles que définies ci-avant.

Selon une autre caractéristique avantageuse de l'invention, la capsule est recouverte, sur sa partie extérieure, d'une couche d'un matériau élastomère destiné à créer une mobilité mécano-physique se substituant a la mobilité physiologique qui n'existe plus sur les implants à cause de l'ostéo-intégration.

Selon des particularités de réalisation de l'invention :
- dans le cas d'un bridge (prothèse conjointe), généralement obtenu par coulée métallique, la capsule est fixée de manière rigide audit bridge ;
- dans le cas d'un appareil dentaire (prothèse adjointe), généralement obtenu par coulée de résine, la capsule possède une forme externe sphérique apte à lui autoriser un mouvement de rotation antéropostérieur par rapport audit appareil sous l'effet des pressions masticatoires.

Les problèmes rencontrés, en implantologie dentaire, par les praticiens et les prothésistes liés plus particulièrement :
- au défaut de parallélisme existant entre les implants pour une prothèse donnée ;
- au soin apporté à chaque étape de réalisation de la prothèse pour respecter le positionnement angulaire des différents implants ;
- aux risques encourus lors du démontage des prothèses ;
sont totalement résolus avec la conception de l'invention telle que décrite et représentée.

En outre, on utilise qu'un seul type de pilier et de capsule.

Un autre avantage de l'invention réside dans le fait que l'on utilise les matériaux et les techniques connues de fabrication et de mise en place des implants et des prothèses. Le pilier implant selon l'invention est utilisable :
- soit comme pilier destiné à être vissé dans un implant ;
- soit comme implant à part entière destiné à être directement vissé dans l'os de la mâchoire.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :
- les figures 1 et 2 sont deux vues de principe, en coupe longitudinale, avant et après assemblage, d'une prothèse pourvue de deux capsules associées à deux piliers, ou implants, positionnés selon deux axes possédant des inclinaisons opposées de valeur maximales, en opposition, afin de mettre en évidence le principe et les limites de fonctionnement des éléments constitutifs de l'invention ;

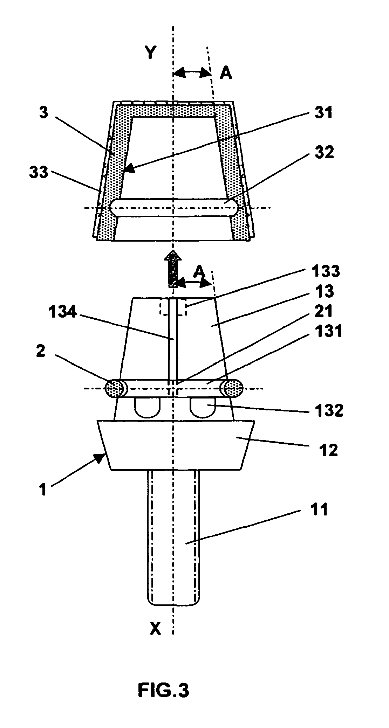

- la figure 3 est une vue, en coupe longitudinale, du dispositif selon l'invention, appliqué au cas d'un bridge, pourvu d'un moyen de liaison démontable ;

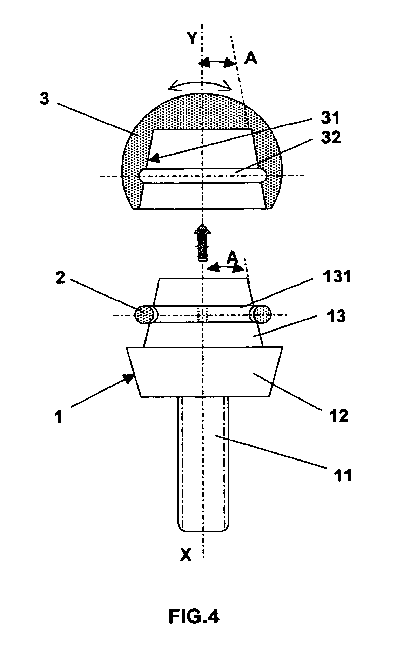

- la figure 4 est une vue, en coupe longitudinale, du dispositif selon l'invention, appliqué au cas d'un appareil dentaire, pourvu d'un moyen de liaison démontable.

### DESCRIPTION DETAILLEE DE L'INVENTION

Le dispositif représenté aux figures, comprend :
- un pilier (1), monolithique, constitué d'une tige filetée (11) apte à être vissée dans un implant ou directement dans l'os de la mâchoire maxillaire ou mandibulaire d'un patient, d'une embase médiane transgingivale (12) et d'une tête tronconique (13) dont les génératrices forment, par rapport à l'axe (X) dudit pilier, dont de l'implant, un angle (A) ;
- une capsule (3), apte à assurer la liaison, permanente ou démontable, de la tête (13) du pilier (1) et de la prothèse (4), pourvue d'une cavité tronconique (31), apte à recevoir ladite tête (13), dont les génératrices forment, par rapport à l'axe (Y) de ladite capsule, un angle (A) qui possède une valeur identique à celle de l'angle (A) relatif à la tête (13) du pilier (1).

Ladite prothèse (4) possède un axe d'insertion (Z) formant avec l'axe (X) du pilier (1) un angle (B) qui correspond également à l'inclinaison de l'implant.

La valeur de l'angle (A) est égale à celle de l'angle (B) qui correspond à l'inclinaison maximale d'un implant appartenant à une même mâchoire, de telle manière que les génératrices des parties coniques d'une quelconque paire de têtes (13) et de capsules (3) appartenant à une même prothèse (4), ne soient jamais en contredépouille par rapport à l'axe d'insertion (Z) de ladite prothèse et ce un n'utilisant qu'un seul type de capsule et sans avoir à respecter, pour chaque pilier ou chaque capsule, lors de la mise en oeuvre de la prothèse, un quelconque emplacement et une quelconque angulation.

L'angle (A) est choisi dans la plage de valeurs comprises, non limitativement, entre 15 et 35 degrés. Il sera défini en fonction de la pratique courante en implantologie dentaire.

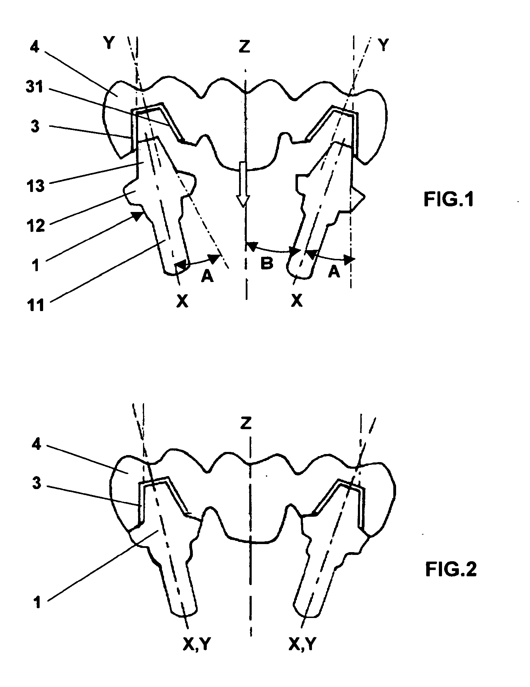

Les figures 1 et 2 mettent en évidence le fonctionnement du concept selon l'invention. Les piliers-implants sont volontairement positionnés selon des inclinaisons opposées extrêmes pour bien montrer les limites de l'invention. Dans ce cas, les génératrices extrêmes opposées des troncs de cône (13) et (31) sont parallèles à l'axe d'insertion (Z) de la prothèse. Ainsi, toute autre inclinaison d'angle inférieur, de tout autre implant entrant dans la composition de la même prothèse, possédera toutes ses génératrices en dépouille par rapport audit axe (Z).

Pour rendre la liaison capsule et pilier démontable :
- la tête (13) du pilier (1) est pourvue d'une rainure annulaire (131) apte à recevoir la partie interne d'un segment annulaire élastique (2) ;
- la cavité tronconique (31) de la capsule (3) est pourvue d'une rainure annulaire (32) apte à recevoir la partie externe du segment annulaire (2) de manière à réaliser une liaison démontable « clipée » entre la tête (13) et la capsule (3).

Pour accroître la rétention de la cupule sur la tête du pilier-implant, les segments et les rainures annulaires pourront être doublés.

Dans le cas d'un bridge, la capsule (3) est intégrée ou collée dans l'armature métallique de celui-ci.

Dans le cas d'un appareil, la capsule (3) est intégrée dans la base en résine de celui-ci et possède une forme externe sphérique apte à lui autoriser un léger mouvement de rotation antéropostérieur dans ladite base.

Selon une autre caractéristique basique de l'invention, dans le cas d'un bridge, la capsule (3) est recouverte, sur sa partie extérieure, d'une couche d'un matériau élastomère (33) destiné à créer une mobilité mécano-physique se substituant a la mobilité physiologique qui n'existe plus sur les implants à cause de leur ostéo-intégration. Elle joue le rôle d'amortisseur afin d'éviter la dégradation et la fonte de l'os autour des implants porteurs, assurant ainsi une plus grande pérennité aux implants et à la prothèse.

Selon d'autres variantes de réalisation de l'invention :
- la base de la tête (13) du pilier (1), comporte des méplats de serrage (132) pour clé dynamométrique ,
- le sommet de la tête (13) du pilier-implant (1), comporte, en creux, un polygone de serrage (133) pour clé dynamométrique ;
- le segment annulaire élastique (2) est fendu, fente (21), de manière à permettre sa pose et sa dépose par rapport à la rainure circulaire (131) de la tête (13) ;
- la tête (13) du pilier implant (1), comporte, sur une génératrice du tronc de cône, une gorge (134) destinée à permettre la dépose dudit segment annulaire (2) au moyen d'un outil en forme de tige pourvue d'une extrémité crochue apte à s'insérer derrière ledit segment pour l'extraire de la rainure (131).

Le pilier-implant (1) peut être utilisé :
- soit comme un pilier destiné à être vissé dans un implant ;
- soit comme un implant destiné à être vissé directement dans l'os de la mâchoire.

Le pilier-implant, monolithique, pourra être réalisé en titane, en zircone ou en tout autre matériau biocompatible.

La capsule pourra être réalisé en titane, en zircone, en matière plastique ou en tout autre matériau biocompatible.

Le procédé de mise en oeuvre de la prothèse utilisant ledit dispositif, consiste, chronologiquement :
a) pour le praticien, sans se soucier d'un quelconque positionnement angulaire et numérique:
   - à mettre en place des piliers, soit sur des implants, soit directement dans l'os de la mâchoire ;
   - à positionner, sur les têtes desdits piliers des capsules de transfert, en matière plastique, de dimensions identiques à celles qui seront insérées dans la prothèse ;
   - à prendre l'empreinte dudit ensemble ;
   - à positionner, dans ladite empreinte, les piliers vissés sur des implants analogues surmontés des capsules de transfert précédentes, clipées ;
b) pour le prothésiste, sans se soucier également d'un quelconque positionnement angulaire et numérique :
   - à réaliser le maître-modèle à partir de l'empreinte transmise par le praticien, dans laquelle il aura, au préalable, inséré des capsules de transfert en liaison avec les implants analogues ;
   - à remplacer les capsules de transfert par des capsules définitives ;
   - à couler l'armature (bridge) ou la base (appareil) de la prothèse sur lesdites capsules ;
   - à réaliser la partie cosmétique de la prothèse en céramique (bridge) ou en résine (appareil) ;
c) pour le praticien, toujours sans se soucier d'un quelconque positionnement angulaire et numérique :
   - à positionner, par « clipage », les capsules définitives précédentes sur les piliers ou piliers-implants ;
   - à coller la prothèse sur lesdites capsules.
La capsule de transfert peut comporter, à sa périphérie, une ou deux rainures équatoriales, non représentées, destinées à son maintien et positionnement vertical lors de la coulée de l'empreinte.

Bien entendu, l'homme de métier sera apte à réaliser l'invention telle que décrite et représentée en appliquant et en adaptant des moyens connus.
Il pourra également prévoir d'autres variantes sans pour cela sortir du cadre de l'invention qui est déterminé par la teneur des revendications.

## Revendications

1. Dispositif destiné à relier une prothèse à un implant dentaire ou directement à l'os de la mâchoire d'un patient;
le dispositif comprenant :
- au moins une paire de piliers (1), monolithiques, constitués, chacun, d'une tige filetée (11) apte à être vissée dans un implant ou directement dans l'os de la mâchoire maxillaire ou mandibulaire d'un patient, d'une embase médiane transgingivale (12) et d'une tête tronconique (13) dont les génératrices forment, avec l'axe (X) dudit pilier, un angle (A) choisi dans la plage 15-35 degrés qui correspond à l'inclinaison maximale tolérée en bouche pour les implants appartenant à une même mâchoire :
- au moins une paire de capsules (3), aptes à assurer, chacune, la liaison, permanente ou démontable, de la prothèse (4) à la tête (13) de chaque pilier (1), pourvues, chacune, d'une cavité tronconique (31), apte à recevoir la tête (13) de chaque pilier (1), dont les génératrices forment, par rapport à l'axe (Y) de chaque capsule, un angle (A) dont la valeur est égale à celle de l'angle (A) de chaque tête tronconique (13) ;
de telle manière que les génératrices des parties coniques d'une quelconque paire de têtes (13) et de capsules (3) appartenant à une même prothèse (4), ne soient jamais en contre dépouille par rapport à l'axe d'insertion (Z) de ladite prothèse et ce sans avoir à respecter, pour chaque pilier ou chaque capsule, lors de la mise en oeuvre de la prothèse, un quelconque emplacement et une quelconque angulation.

2. Dispositif, selon la revendication 1, **caractérisé en ce qu'**il comprend une capsule de transfert, en matière plastique, de dimensions identiques à la capsule de liaison (3), destinée à être placée sur la tête de chaque pilier (1) pendant l'étape de réalisation du maître modèle et pourvue, à sa périphérie, de une ou deux rainures équatoriales destinées à son maintien et positionnement vertical lors de la coulée de l'empreinte.

3. Dispositif, selon la revendication 1, **caractérisé en ce que** :
- la tête (13) du pilier (1) est pourvue d'une rainure annulaire (131) apte à recevoir la partie interne d'un segment annulaire élastique (2) ;
- la cavité tronconique (31) de la capsule (3) est pourvue d'une rainure annulaire (32) apte à recevoir la partie externe dudit segment annulaire (2) ;
de manière à réaliser une liaison démontable entre la tête (13) et la capsule (3).

4. Dispositif, selon la revendication 1, **caractérisé en ce que**, dans le cas d'un bridge, la capsule (3) est intégrée ou collée dans l'armature métallique de celui-ci.

5. Dispositif, selon la revendication 4, **caractérisé en ce que** la capsule (3) est recouverte, sur sa partie extérieure, d'une couche d'un matériau élastomère (33) destiné à créer une mobilité mécano-physique se substituant a la mobilité physiologique qui n'existe plus sur les implants à cause de leur ostéo-intégration.

6. Dispositif, selon la revendication 1, **caractérisé en ce que**, dans le cas d'un appareil, la capsule (3) est intégrée dans la base en résine de celui-ci et possède une forme externe sphérique apte à lui autoriser un léger mouvement de rotation antéropostérieur dans ladite base.

7. Dispositif, selon la revendication 1, **caractérisé en ce que** la base de la tête (13) du pilier (1), comporte des méplats de serrage (132) pour clé dynamométrique.

8. Dispositif, selon la revendication 1, **caractérisé en ce que** le sommet de la tête (13) du pilier (1), comporte, en creux, un polygone de serrage (133) pour clé dynamométrique.

9. Dispositif, selon la revendication 2, **caractérisé en ce que**, le segment annulaire élastique (2) est fendu, fente (21), de manière à permettre sa pose et sa dépose par rapport à la rainure circulaire (131) de la tête (13).

10. Dispositif, selon la revendication 2, **caractérisé en ce que** la tête (13) du pilier (1), comporte, sur une génératrice du tronc de cône, une gorge (134) destinée à permettre la dépose du segment annulaire élastique (2) au moyen d'un outil en forme de tige pourvue d'une extrémité crochue apte à s'insérer derrière ledit segment pour l'extraire de la rainure (131).

11. Dispositif, selon la revendication 1, **caractérisé en ce que** le pilier (1) est utilisé comme pilier destiné à être vissé dans un implant.

12. Dispositif, selon la revendication 1, **caractérisé en ce que** le pilier (1) est utilisé comme implant destiné à être vissé directement dans l'os de la mâchoire.

13. Procédé de mise en oeuvre du dispositif selon l'une quelconque des revendications précédentes, **caractérisé en ce qu'**il consiste, pour le prothésiste, sans avoir à respecter, pour chaque pilier ou chaque capsule, un quelconque emplacement ou une quelconque angulation :
- à réaliser le maître-modèle à partir de l'empreinte transmise par le praticien, dans laquelle il aura, au préalable, inséré les capsules de transfert en liaison avec les implants analogues ;
- à remplacer les capsules de transfert par des capsules définitives ;
- à couler l'armature ou la base de la prothèse sur lesdites capsules ;
- à réaliser la partie cosmétique de la prothèse en céramique ou en résine.

## Claims

1. Device for connecting a prosthesis to a dental implant or directly to a patient's jawbone; the device comprising:
- at least one pair of monolithic abutments (1), each consisting of a threaded rod (11) suitable for being screwed into an implant or directly into a patient's upper or lower jawbone, a transgingival median socket (12) and a tapered head (13) wherein the generatrices form, with the axis (X) of said abutment, an angle (A) chosen in the range of 15-35 degrees consisting of the maximum inclination tolerated in the mouth for implants belonging to the same jaw;
- at least one pair of caps (3), each suitable for providing the permanent or detachable connection of the prosthesis (4) to the head (13) of each abutment (1), each provided with a tapered cavity (31), suitable for receiving the head (13) of each abutment (1), wherein the generatrices form, with the axis (Y) of each cap, an angle (A) wherein the value is equal to that of the angle (A) of the tapered head (13);
in such a way that the generatrices of the conical portions of any pair of heads (13) and caps (3) belonging to the same prosthesis (4), are never undercut with respect to the insertion axis (Z) of said prosthesis and without having to observe, for each abutment or each cap, when using the prosthesis, any position or any angulation.

2. Device, according to claim 1, **characterised in that** it comprises a transfer cap, made of plastic, having identical dimensions to the connection cap (3), to be positioned on the head of each abutment (1) during the step for producing the master template and provided, on the periphery thereof, with one or two equatorial grooves for securing and vertically positioning same during the casting of the mould.

3. Device, according to claim 1, **characterised in that**:
- the head (13) of the abutment (1) is provided with an annular groove (131) suitable for receiving the inner portion of an elastic annular segment (2);
- the tapered cavity (31) of the cap (3) is provided with an annular groove (32) suitable for receiving the outer portion of said annular segment (2);
so as to create a detachable connection between the head (13) and the cap (3).

4. Device, according to claim 1, **characterised in that**, in the case of a bridge, the cap (3) is integrated or bonded into the metal frame thereof.

5. Device, according to claim 4, **characterised in that** the cap (3) is coated, on the exterior thereof, with a layer of an elastomer material (33) for creating mechanophysical mobility substituting the physiological mobility no longer present on implants due to the osseointegration thereof.

6. Device, according to claim 1, **characterised in that**, in the case of an appliance, the cap (3) is integrated into the resin base thereof and has a spherical outer shape suitable for enabling a slight anteroposterior rotational movement in said base.

7. Device, according to claim 1, **characterised in that** the base of the head (13) of the abutment (1), comprises torque wrench tightening faces (132).

8. Device, according to claim 1, **characterised in that** the top of the head (13) of the abutment (1), comprises a hollowed torque wrench tightening polygon (133).

9. Device, according to claim 2, **characterised in that** the elastic annular segment (2) is slotted with the slot (21), so as to enable the fitting and removal thereof with respect to the circular groove (131) of the head (13).

10. Device, according to claim 2, **characterised in that** the head (13) of the abutment (1) comprises, on the truncated cone generatrix, a neck (134) for enabling the removal of the elastic annular segment (2) by means of a rod-shaped tool provided with a hooked end suitable for being inserted behind said segment to extract same from the groove (131).

11. Device, according to claim 1, **characterised in that** the abutment (1) is used as an abutment to be screwed into an implant.

12. Device, according to claim 1, **characterised in that** abutment (1) is used as an implant to be screwed directly into the jawbone.

13. Method for using the device according to any of the above claims, **characterised in that** it consists, for the prosthetist, without having to observe, for each abutment or each cap, any position or any angulation, of:
- producing the master template from the mould provided by the practitioner, wherein the transfer caps connected to the equivalent implants have been previously inserted;
- replacing the transfer caps by definitive caps;
- casting the frame or base of the prosthesis on said caps;
- producing the cosmetic portion of the prosthesis in ceramic or resin.

## Patentansprüche

1. Vorrichtung, die ausgelegt ist, um eine Prothese mit einem Zahnimplantat oder direkt mit dem Knochen des Kiefers eines Patienten zu verbinden, wobei die Vorrichtung Folgendes umfasst:
- mindestens ein Paar monolithische Träger (1), die jeweils aus einem Gewindebolzen (11) bestehen, ausgelegt, um in ein Implantat oder direkt in den Knochen des Ober- oder Unterkiefers eines Patienten geschraubt zu werden, aus einem transgingivalen mittleren Sockel (12) und einem kegelstumpfartigen Kopf (13), dessen Generatoren mit der Achse (X) des Trägers einen Winkel (A) bilden, der aus dem Bereich von 15 - 35 Grad gewählt ist, der der maximalen Neigung entspricht, die im Mund für die Implantate toleriert werden, die zu einem gleichen Kiefer gehören;
- mindestens ein Paar Kapseln (3), die ausgelegt sind, um jeweils die permanente oder abmontierbare Verbindung der Prothese (4) mit dem Kopf (13) jedes Trägers (1) sicherzustellen, jeweils ausgestattet mit einem kegelstumpfartigen Hohlraum (31), der dazu ausgelegt ist, den Kopf (13) jedes Trägers (1) aufzunehmen, deren Generatoren mit Bezug auf die Achse (Y) jeder Kapsel einen Winkel (A) bilden, dessen Wert gleich demjenigen des Winkels (A) des kegelstumpfartigen Kopfes (13) ist,
so dass die Generatoren der konischen Teile jedes Paars von Köpfen (13) und Kapseln (3), die zu einer gleichen Prothese (4) gehören, sich nie im Hinterschnitt mit Bezug auf die Einführungsachse (Z) der Prothese befinden, und dies, ohne für jeden Träger oder jede Kapsel, bei der Durchführung des Prothese, irgendeine Anordnung und irgendeine Abwinkelung berücksichtigen zu müssen.

2. Vorrichtung nach Anspruch 1, **dadurch gekennzeichnet, dass** sie eine Übertragungskapsel aus Plastikmaterial umfasst, mit Abmessungen, die mit denjenigen der Verbindungskapsel (3) identisch sind, ausgelegt, um auf dem Kopf jedes Trägers (1) während des Schritts des Durchführens des Mastermodells angeordnet zu werden, und an ihrem Umfang mit einer oder zwei äquatorialen Nuten versehen, die für ihre vertikale Aufrechterhaltung und Positionierung während der Gusses des Abdrucks bestimmt sind.

3. Vorrichtung nach Anspruch 1, **dadurch gekennzeichnet, dass**
- der Kopf (13) des Trägers (1) mit einer ringförmigen Nut (131) versehen ist, ausgelegt, um den internen Teil eines elastischen ringförmigen Abschnitts (2) aufzunehmen;
- der kegelstumpfartige Hohlraum (31) der Kapsel (3) mit einer ringförmigen Nut (32) versehen ist, dazu ausgelegt, um den externen Teil des ringförmigen Abschnitts (2) aufzunehmen;
um eine abmontierbare Verbindung zwischen dem Kopf (13) und der Kapsel (3) durchzuführen.

4. Vorrichtung nach Anspruch 1, **dadurch gekennzeichnet, dass** im Fall einer Brücke die Kapsel (3) in die metallische Bewehrung dieser integriert oder geklebt ist.

5. Vorrichtung nach Anspruch 4, **dadurch gekennzeichnet, dass** die Kapsel (3) auf ihrer äußeren Seite mit einer Schicht aus einem elastomeren Material (33) bedeckt ist, dazu ausgelegt, eine mechanisch-physische Mobilität zu erzeugen, wodurch die physiologische Mobilität ersetzt wird, die bei den Implantaten aufgrund ihrer Integration in den Knochen nicht mehr gegeben ist.

6. Vorrichtung nach Anspruch 1, **dadurch gekennzeichnet, dass** im Fall eines Geräts die Kapsel (3) in die Basis aus Harz dieser integriert ist und eine sphärische äußere Form aufweist, die dazu in der Lage ist, ihr eine geringfügige Drehbewegung von vorne nach hinten in der Basis zu ermöglichen.

7. Vorrichtung nach Anspruch 1, **dadurch gekennzeichnet, dass** die Basis des Kopfes (13) des Trägers (1) Spannflächen (132) für einen dynamometrischen Schlüssel aufweist.

8. Vorrichtung nach Anspruch 1, **dadurch gekennzeichnet, dass** die Spitze des Kopfes (13) des Trägers (1) versenkt ein Spannpolygon (133) für einen dynamometrischen Schlüssel aufweist.

9. Vorrichtung nach Anspruch 2, **dadurch gekennzeichnet, dass** der elastische ringförmige Abschnitt (2) gespalten ist, Spalt (21), um seine Anbringung und seinen Ausbau mit Bezug auf die ringförmige Nut (131) des Kopfes (13) zu ermöglichen.

10. Vorrichtung nach Anspruch 2, **dadurch gekennzeichnet, dass** der Kopf (13) des Trägers (1) auf einem Generator des Kegelstumpfes eine Auskehlung (134) umfasst, die ausgelegt ist, um den Ausbau des elastischen ringförmigen Abschnitts (2) mit Hilfe eines Werkzeugs in Form eines Schafts zu ermöglichen, der mit einem hakenartigen Ende versehen ist, dazu in der Lage, hinter dem Abschnitt eingeführt zu werden, um ihn aus der Nut (131) zu entfernen.

11. Vorrichtung nach Anspruch 1, **dadurch gekennzeichnet, dass** der Träger (1) als Träger verwendet wird, der dazu ausgelegt ist, in ein Implantat geschraubt zu werden.

12. Vorrichtung nach Anspruch 1, **dadurch gekennzeichnet, dass** der Träger (1) als Implantat verwendet wird, das dazu ausgelegt ist, direkt in den Knochen des Kiefers geschraubt zu werden.

13. Verfahren zur Durchführung der Vorrichtung nach einem der vorhergehenden Ansprüche, **dadurch gekennzeichnet, dass** es für den Prothetiker, ohne für jeden Träger oder jede Kapsel irgendeine Anordnung oder irgendeine Winkelstellung berücksichtigen zu müssen, darin besteht:
- das Mastermodell auf der Grundlage des Abdrucks herzustellen, das vom Arzt übermittelt wurde, in das er im Voraus die Übertragungskapseln in Verbindung mit den analogen Implantaten, eingeführt hat:
- die Übertragungskapseln durch definitive Kapseln zu ersetzen;
- die Bewehrung oder die Basis der Prothese auf die Kapseln zu gießen;
- den kosmetischen Teil der Prothese aus Keramik oder aus Harz herzustellen.
